(19) **Europäisches Patentamt**
**European Patent Office**
**Office européen des brevets**

(11) **EP 3 957 845 B1**

(12) **EUROPÄISCHE PATENTSCHRIFT**

(45) Veröffentlichungstag und Bekanntmachung des Hinweises auf die Patenterteilung:
**08.04.2026 Patentblatt 2026/15**

(21) Anmeldenummer: **21187732.9**

(22) Anmeldetag: **26.07.2021**

(51) Internationale Patentklassifikation (IPC):
**F02D 41/14** *(2006.01)* **F02D 41/00** *(2006.01)*

(52) Gemeinsame Patentklassifikation (CPC):
**F02D 41/0007; F04D 27/001;** F02B 2037/125;
F02D 2041/1432; F02D 2200/0402;
F02D 2200/0406; F02D 2200/0416; F02D 2200/703;
Y02T 10/12

(54) **VERFAHREN ZUM MODELLIEREN EINER VERDICHTEREINTRITTSTEMPERATUR UND/ODER EINER VERDICHTERAUSTRITTSTEMPERATUR EINES VERDICHTERS, EIN STEUERGERÄT UND EIN KRAFTFAHRZEUG**

METHOD FOR MODELLING A COMPRESSOR INLET TEMPERATURE AND / OR A COMPRESSOR OUTLET TEMPERATURE OF A COMPRESSOR, A CONTROL DEVICE AND A MOTOR VEHICLE

PROCÉDÉ DE MODÉLISATION D'UNE TEMPÉRATURE D'ENTRÉE DE COMPRESSEUR ET/OU D'UNE TEMPÉRATURE DE SORTIE DE COMPRESSEUR D'UN COMPRESSEUR, APPAREIL DE COMMANDE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2020 DE 102020210642**

(43) Veröffentlichungstag der Anmeldung:
**23.02.2022 Patentblatt 2022/08**

(73) Patentinhaber: **VOLKSWAGEN AG**
**38440 Wolfsburg (DE)**

(72) Erfinder:
• **Müller, Sven**
**30629 Hannover (DE)**
• **Stötzel, Till**
**18057 Rostock (DE)**

(56) Entgegenhaltungen:
EP-A1- 3 181 875 DE-A1- 102008 054 764
DE-B3- 102016 220 543 US-B2- 9 091 202

**Beschreibung**

Die Erfindung betrifft ein Verfahren, ein entsprechendes Steuergerät und ein entsprechendes Kraftfahrzeug zum Modellieren einer Verdichtereintrittstemperatur und/oder einer Verdichteraustrittstemperatur eines Verdichters eines Abgasturboladers für eine Verbrennungskraftmaschine. Dabei berücksichtigt das Modellieren ein Auftreten eines Verdichterpumpens.

Bei Verdichtern kann es in ungünstigen Betriebszuständen zu einem sogenannten "Verdichterpumpen" kommen, wenn bei einem bestimmten Druck ein Mindestmassenstrom unterschritten wird. Bei einem zu kleinen Massenstrom wird ein Anströmwinkel auf die Verdichterschaufeln so groß, dass es zu einem Abreißen des Massenstroms kommt. Dadurch wird weniger Impuls auf das Strömungsmedium übertragen, wodurch der Massenstrom weiterhin abnimmt und die Strömung auch an weiteren Verdichterschaufeln abreißt. Eine Druckdifferenz zwischen einem Eintritt und einem Austritt des Verdichters kann nicht mehr aufrechterhalten werden, wodurch es zu einer Rückströmung durch den Verdichter kommt.

Moderne Ladedruckregelungsverfahren basieren auf physikalischen Modellen der Luftstrecke zu einer Verbrennungskraftmaschine. Eine Einhaltung der Bauteilgrenzen von Bauteilen entlang der Luftstrecke findet durch eine Begrenzung eines Ladedrucksollwerts und/oder unter Berücksichtigung einer über einen Verdichter modellierten Turboladerdrehzahl statt. Bei der Bestimmung der Turboladerdrehzahl sowie des Grundladedrucks wird ein Korrekturfaktor für die Verdichteraustrittstemperatur verwendet, der nicht hinreichend genau modelliert ist. Zum einen wird die Temperatur am Verdichtereintritt nicht modelliert und zum anderen wird ein Einfluss des Verdichterpumpens nicht berücksichtigt. Dies führt zu Abweichungen bei der Turboladerdrehzahlmodellierung, die besonders bei modellierten Drehzahlen an der maximalen Drehzahlgrenze kritisch zu betrachten ist. Des Weiteren stellt die genaue Modellierung der Verdichteraustrittstemperatur die Grundlage zur Inbetriebnahme eines elektrischen Abgasturbolader(ATL)-Boosters dar, so dass eine Leistungsreduktion des Triebwerks der Verbrennungskraftmaschine zum Bauteilschutz möglich ist.

Die EP 3 181 875 A1 beschreibt ein Verfahren zum Bestimmen einer Ladegasaustrittstemperatur eines Ladegases aus einem Abgasturbolader. In dem Verfahren wird die Ladegasaustrittstemperatur unter Berücksichtigung eines Ladegasaustrittstemperatur-Korrekturwertes ermittelt, wobei der Ladegasaustrittstemperatur-Korrekturwert auf einer Abgastemperaturabweichung zwischen einer Abgasreferenztemperatur und einer Abgasisttemperatur beruht. Bei der genannten Abgasisttemperatur kann es sich beispielsweise um die aktuell vor dem Verdichter eines Abgasturboladers gemessene Abgastemperatur handeln. Eine Berücksichtigung eines Verdichterpumpens erfolgt nicht in der EP 3 181 875.

Die DE 10 2016 220 543 B3 offenbart ein Verfahren zur Erkennung eines Verdichterpumpens eines Turboverdichters einer Brennkraftmaschine, wobei das Verdichterpumpen des Turboverdichters der Brennkraftmaschine basierend auf einem Vergleich einer Phaseninformation eines Signals eines ersten Druckaufbaus und einer Phaseninformation eines zweiten Signals der Brennkraftmaschine erkannt wird. US 9 091 202 B2 offenbart mögliche Gegenmassnahmen zur Verringerung des Verdichterpumpens und wie diese die Verdichtereingangstemperatur verändern.

Ausgehend von den bekannten Ansätzen liegt eine Aufgabe der Erfindung darin, alternative und verbesserte Verfahren und Vorrichtungen zum Modellieren einer Verdichtereintrittstemperatur und/oder einer Verdichteraustrittstemperatur eines Verdichters bereitzustellen.

Diese Aufgabe wird durch ein Verfahren nach Anspruch 1 und 2, ein Steuergerät nach Anspruch 11 und ein Kraftfahrzeug nach Anspruch 12 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der Erfindung betrifft ein Verfahren zum Modellieren einer Verdichtereintrittstemperatur und/oder einer Verdichteraustrittstemperatur eines Verdichters unter Berücksichtigung eines Verdichterpumpens, umfassend:

- Ermitteln eines Druckgradienten über den Verdichter;
- Ermitteln eines Massenstromgradienten über den Verdichter;
- Feststellen, dass das Verdichterpumpen vorliegt, wenn der Druckgradient eine Druckgradientenobergrenze überschreitet und der Massenstromgradient eine Massenstromgradientenuntergrenze unterschreitet; und
- Ermitteln der Verdichtereintrittstemperatur mit einem von dem Verdichterpumpen abhängigen Temperaturkorrekturfaktor und/oder Ermitteln der Verdichteraustrittstemperatur basierend auf einem korrigierten Verdichteraustrittsdruck, der von dem Verdichterpumpen abhängt.

Dabei ist die Verdichtereintrittstemperatur die Temperatur eines Fluids, bspw. Luft, wenn es in den Verdichter strömt, und entspricht somit einer Verdichtereintrittsgastemperatur oder Verdichtereintrittsfluidtemperatur. Entsprechend ist die Verdichteraustrittstemperatur die Temperatur des Fluids, wenn es aus dem Verdichter strömt, und entspricht somit einer Verdichteraustrittsgastemperatur oder einer Verdichteraustrittsfluidtemperatur. Mit "verdichtereintrittsseitig" und "vor dem Verdichter" ist stromaufwärts des Verdichter gemeint und mit "verdichteraustrittsseitig" und "nach dem Verdichter" stromabwärts des Verdichters.

Der Verdichter ist Teil eines Abgasturboladers für eine Verbrennungskraftmaschine eines Kraftfahrzeugs. Die Verbrennungskraftmaschine kann bspw. ein Otto- oder Dieselmotor sein.

Bei dem Verfahren wird mindestens eine von der Verdichtereintrittstemperatur und der Verdichteraustrittstemperatur unter Berücksichtigung des Verdichterpumpens modelliert. Dabei kann "Modellieren" mindestens eines von Bestimmen, Ermitteln, Berechnen und dergleichen umfassen. Das Phänomen "Verdichterpumpen" ist oben beschrieben.

In dem Verfahren wird der Druckgradient über den Verdichter ermittelt. Der Druckgradient ist der Verlauf der Druckänderung in Abhängigkeit vom Ort. Mit "über den Verdichter" ist die Strecke von der Verdichtereintrittsseite zu der Verdichteraustrittsseite gemeint.

Ferner wird der Massenstromgradient über den Verdichter ermittelt. Der Massenstromgradient ist der Verlauf der Massenstromänderung in Abhängigkeit vom Ort. Der Massenstrom bezieht sich hier auf die angesaugte Luft, die entlang eines Ansaugtrakts über den Verdichter zur Verbrennungskraftmaschine geführt wird. In der Regel kann eine Menge der angesaugten Luft zumindest teilweise über eine entsprechende Drosselklappe eingestellt werden.

Der Ansaugtrakt umfasst alle Verbrennungsluft führenden Bauteile der Verbrennungskraftmaschine, die sich vor einem Brennraum der Verbrennungskraftmaschine befinden.

Das Ermitteln des Druckgradienten und/oder des Massenstromgradienten kann über entsprechend angeordnete Erfassungseinrichtungen wie Sensoren und/oder Verdichterkennfelder ermittelt werden. So können Erfassungseinrichtungen zum Messen von Druck, bspw. Drucksensoren, verwendet werden, um den Verdichtereintrittsdruck und/oder den Verdichteraustrittsdruck zu erfassen. Dabei ist der Verdichtereintrittsdruck der Druck des Fluids auf der Verdichtereintrittsseite und der Verdichteraustrittsdruck der Druck des Fluids auf der Verdichteraustrittsseite. Ferner können Erfassungseinrichtungen zum Messen des (Luft-)Massenstroms vor und/oder nach dem Verdichter verwendet werden, wie z. B. ein Durchflusssensor.

Anhand des ermittelten Druckgradienten und des ermittelten Massenstromgradienten über den Verdichter kann ein Vorliegen des Verdichterpumpens festgestellt werden. Denn charakteristisch für das Verdichterpumpen ist ein stark abfallender Massenstrom bei gleichzeitiger (oder leicht verzögerter) starker Druckerhöhung nach dem Verdichter. Diese Druckerhöhung entsteht aufgrund der Trägheit einer Luftsäule und eines Laufzeugs des Abgasturboladers. Anschließend reißt der Massenstrom über den Verdichter beim Überschreiten der Pumpgrenze ab, wodurch der Druck nach dem Verdichter abfällt.

Um nun das Verdichterpumpen zu erkennen, werden der Druckgradient und der Massenstromgradient über den Verdichter gegen entsprechende Schwellen geprüft. Mit anderen Worten, es wird festgestellt, dass das Verdichterpumpen vorliegt, wenn der Druckgradient die Druckgradientenobergrenze überschreitet und der Massenstromgradient die Massenstromgradientenuntergrenze unterschreitet. Dabei soll "überschreiten" bedeuten, dass der Druckgradient gleich oder größer als die Druckgradientenobergrenze ist. Entsprechend soll "unterschreiten" bedeuten, dass der Massenstromgradient gleich oder kleiner als die Massenstromgradientenuntergrenze ist.

Die Druckgradientenobergrenze und die Massenstromgradientenuntergrenze sind vorbestimmte Grenzwerte. Dabei kann die Druckgradientenobergrenze bspw. zwischen 5000 und 10000 hPA/s (Hektopascal pro Sekunde) liegen. Ferner kann die Massenstromgradientenuntergrenze zwischen 1000 und 2000 kg/s (Kilogramm pro Sekunde) liegen.

Ferner wird die Verdichtereintrittstemperatur mit dem Temperaturkorrekturfaktor ermittelt, der abhängig von dem Verdichterpumpen ist. Mit anderen Worten, der Temperaturkorrekturfaktor wird zum Berücksichtigen des Verdichterpumpens verwendet. So kann der Temperaturkorrekturfaktor je nachdem, ob das Verdichterpumpen vorliegt oder nicht, einen entsprechenden Wert annehmen.

Als Grundlage zum Ermitteln der Verdichtereintrittstemperatur wird die ideale Gasgleichung verwendet, nach der Folgendes gilt:

$$p * V = n * R * T$$

mit

p     = Druck
V     = Volumen
n     = Stoffmenge
R     = universelle oder molare Gaskonstante
T     = Temperatur

Alternativ oder ergänzend wird die Verdichteraustrittstemperatur basierend auf dem korrigierten Verdichteraustrittsdruck ermittelt, wobei der korrigierte Verdichteraustrittsdruck von dem Verdichterpumpen abhängt. Mit anderen Worten, der korrigierte Verdichteraustrittsdruck wird zum Berücksichtigen des Verdichterpumpens verwendet. So kann der korrigierte Verdichteraustrittsdruck je nachdem, ob das Verdichterpumpen vorliegt oder nicht, einen entsprechenden Wert annehmen.

Anhand des Druckgradienten und des Massenstromgradienten über den Verdichter kann das Auftreten von Verdichterpumpen besonders einfach und robust erkannt werden. Somit kann das Temperaturmodell für den Verdichter das Verdichterpumpen zuverlässig berücksichtigen.

In weiteren Ausführungsformen kann der Druckgradient einem maximalen Druckgradienten über einen vorbestimmen Zeitraum entsprechen. Alternativ oder ergänzend kann der Massenstromgradient einem minimalen Massenstromgradienten über den vorbestimmten Zeitraum entsprechen.

Beispielsweise kann der Druckgradient in regelmäßigen Zeitabständen über den vorbestimmten Zeitraum ermittelt werden, so dass man mehrere Druckgradienten für den vorbestimmten Zeitraum erhält. Aus diesen mehreren Druckgradienten wird der maximale Druckgradient ermittelt, also der Druckgradient mit dem höchsten Wert bzw. mit dem höchsten Betrag. Entsprechendes gilt für das Ermitteln des Massenstromgradienten über den vorbestimmten Zeitraum. Dabei können die regelmäßigen Zeitabstände bspw. zwischen 5 und 15 Millisekunden groß sein. In manchen Ausführungsformen kann der regelmäßige Zeitabstand bspw. 10 Millisekunden groß sein. In weiteren Ausführungsformen kann der vorbestimmte Zeitraum bspw. zwischen 25 und 75 Millisekunden groß sein. Indem der maximale Druckgradient und/oder der maximale Massenstromgradient über den vorbestimmten Zeitraum gegen die Druckgradientenobergrenze bzw. Massenstromgradientenuntergrenze geprüft werden, können leicht verzögerte Abläufe bei den charakteristischen Vorgängen des Verdichterpumpens, nämlich der abfallende Massenstrom über den Verdichter und die Druckerhöhung nach dem Verdichter, berücksichtigt werden. Somit kann eine Robustheit des Erkennens des Verdichterpumpens verbessert werden.

In manchen Ausführungsformen können beim Ermitteln der Verdichtereintrittstemperatur und/ oder der Verdichteraustrittstemperatur Wärmeübertragungseinflüsse berücksichtigt werden. Somit kann ein durch die Wärmeübertragungseinflüsse bedingter Temperaturstieg ermittelt werden. Folglich ist es dadurch möglich, die Verdichtereintrittstemperatur und/oder die Verdichteraustrittstemperatur vergleichsweise präzise zu modellieren.

So können in weiteren Ausführungsformen die Wärmeübertragungseinflüsse mindestens eines von Wandwärmeverlusten, Stauwärme und von heißen Bauteilen ausgehende Wärmestrahlungen umfassen.

Dabei entsprechen Wandwärmeverluste dem Verlust von Wärme des Fluids an Bauteilwänden entlang des Ansaugtrakts der Verbrennungskraftmaschine, wobei der Verlust der Wärme auf Konvektion beruht. Das Fluid gibt also Wärme an die Bauteilwände ab.

Ferner kann eine Wärmestrahlung berücksichtigt werden, die das Fluid erwärmt. Die Wärmestrahlung kann von heißen Bauteilen, wie z. B. der Verbrennungskraftmaschine oder deren Saugrohr, ausgestrahlt werden.

Die Stauwärme vor dem Verdichter ist abhängig von einer Fahrzeuggeschwindigkeit. Wenn das Fahrzeug bspw. langsamer fährt, wird weniger Massenstrom durch den Verdichter durchgesetzt und umso stärker ist der Einfluss einer Temperatur der Verbrennungskraftmaschine. Eine zunehmende Differenz zwischen Umgebungstemperatur und der Temperatur der Verbrennungskraftmaschine führt zu einer Erwärmung des Fluids vor dem Verdichter, d.h. die Stauwärme nimmt zu.

Dadurch kann bspw. eine Verdichtereintrittstemperatur modelliert werden, indem eine Umgebungstemperatur (die einer Temperatur des angesaugten Fluids entspricht) mit einer Temperaturänderung, in der Regel ein Temperaturanstieg, resultierend aus den Wärmeübertragungseinflüssen verrechnet wird. Dabei wird ein Einfluss des Verdichterpumpens auf die Verdichtereintrittstemperatur noch nicht berücksichtigt. Gemäß einer Ausführungsform kann also der (verdichtereintrittsseitige) Temperaturanstieg durch die obigen Wärmeübertragungseinflüsse auf die Umgebungstemperatur addiert werden, um die Verdichtereintrittstemperatur zu erhalten, bei der das Verdichterpumpen noch nicht berücksichtigt wird. Ähnliches gilt auch für das Modellieren der Verdichteraustrittstemperatur.

In manchen Ausführungsformen können die Wärmeübertragungseinflüsse mit mindestens einem von Kennlinien und Kennfeldern bestimmt werden. Damit ist gemeint, dass ein Wärmeeintrag und ein Wärmeaustrag in bzw. aus dem Fluid und somit ein Temperaturanstieg bzw. Temperaturabstieg des Fluids bestimmbar ist. Die Kennlinien und/oder Kennfelder können im Vorfeld ermittelt werden und in einem (Motor-)Steuergerät hinterlegbar sein. Dadurch können die Wärmeübertragungseinflüsse besonders einfach ermittelt (abgerufen) werden.

In weiteren Ausführungsformen kann der Temperaturkorrekturfaktor basierend auf einem Temperaturanstieg durch das Verdichterpumpen ermittelt werden. Es resultiert also ein Temperaturanstieg des Fluids, weil das Verdichterpumpen vorliegt. Indem der Temperaturkorrekturfaktor auf diesem Temperaturanstieg basiert, kann beim Ermitteln der Verdichtereintrittstemperatur das Auftreten des Verdichterpumpens besonders einfach berücksichtigt werden.

In weiteren Ausführungsformen kann der Temperaturanstieg durch das Verdichterpumpen basierend auf einem Druckverhältnis zwischen Umgebungsdruck und einem Verdichtereintrittsdruck ermittelt werden. Dabei kann der Zusammenhang zwischen diesem Temperaturanstieg und diesem Druckverhältnis in einem Kennfeld abgelegt sein. Somit basiert der Temperaturkorrekturfaktor ebenfalls auf dem Druckverhältnis zwischen dem Umgebungsdruck und dem Verdichtereintrittsdruck. Dadurch können der Temperaturanstieg und somit der Temperaturkorrekturfaktor besonders einfach ermittelt werden.

In manchen Ausführungsformen kann der Temperaturanstieg durch das Verdichterpumpen mit einem Differenzierer mit Verzögerung erster Ordnung modelliert werden. In der Regel erfolgt der Temperaturanstieg sprunghaft und nimmt über die Zeit ab. Dieses Verhalten kann bspw. mit einem DT1-Glied oder PDT1-Glied modelliert werden. Dabei sind diese Glieder Übertragungsglieder, die aus dem Bereich der Regelungstechnik bekannt sind. Alternativ zu den genannten Übertragungsgliedern können auch solche verwendet werden, die ein abklingendes Verhalten der Sprungantwort aufweisen. Somit kann die Verdichtereintrittstemperatur präziser ermittelt werden.

In weiteren Ausführungsformen kann die ermittelte Verdichteraustrittstemperatur auf einer unkorrigierten Verdichtereintrittstemperatur basieren. Die unkorrigierte Verdichtereintrittstemperatur lässt einen Einfluss des Verdichterpumpen auf die Verdichtereintrittstemperatur unberücksichtigt. Die unkorrigierte Verdichtereintrittstemperatur berücksichtigt also nur einen Temperaturanstieg durch die oben beschriebenen Wärmeübertragungseinflüsse.

Der Einfluss des Verdichterpumpens auf die Verdichtereintrittstemperatur wird somit beim Ermitteln der Verdichteraustrittstemperatur außen vorgelassen. Stattdessen kann ein Einfluss des Verdichterpumpens auf die Verdichteraustrittstemperatur mit dem korrigierten Verdichteraustrittsdruck berücksichtigt werden. Dadurch kann, basierend auf einer isentropen Verdichtung am Verdichter, die Verdichteraustrittstemperatur präziser ermittelt werden.

Dabei gilt bei einer isentropen Verdichtung Folgendes:

$$\frac{T_2}{T_1} = \left(\frac{p_2}{p_1}\right)^{\frac{\kappa-1}{\kappa}}$$

mit

$T_1$ = Verdichtereintrittstemperatur
$T_2$ = Verdichteraustrittstemperatur
$p_1$ = Druck vor dem Verdichter
$p_2$ = Druck nach dem Verdichter
$\kappa$ = Isentropenexponent

In manchen Ausführungsformen kann die unkorrigierte Verdichtereintrittstemperatur basierend auf einem Druckverhältnis zwischen Umgebungsdruck und einem Verdichtereintrittsdruck korrigiert werden. Somit erfolgt eine Korrektur der Dichte des angesaugten Fluids. Dadurch kann die Verdichtereintrittstemperatur präziser bestimmt werden

In weiteren Ausführungsformen kann eine unkorrigierte Verdichtereintrittstemperatur tiefpassgefiltert werden. Durch das Tiefpassfiltern kann ein Signal, das die unkorrigierte Verdichtereintrittstemperatur darstellt, stabilisiert werden und/oder ein Rauschen in dem Signal unterdrückt werden. Somit kann die Verdichtereintrittstemperatur genauer ermittelt werden.

In manchen Ausführungsformen kann zur Fehlerabsicherung der korrigierte Verdichteraustrittsdruck einem gemessenen Verdichteraustrittsdruck entsprechen, wenn ein Druckverhältnis über den Verdichter kleiner als ein Druckverhältnisgrenzwert ist und der gemessene Verdichteraustrittsdruck kleiner als ein letzter gültiger Verdichteraustrittsdruck. Der letzte gültige Verdichteraustrittsdruck ist derjenige, der vor dem Auftreten des Verdichterpumpens vorliegt. Anders ausgedrückt, der letzte gültige Verdichteraustrittsdruck ist der Wert für den Verdichteraustrittsdruck, bevor es zu einem Anstieg des Verdichteraustrittsdrucks wegen Verdichterpumpen kommt. Dadurch wird die Temperaturmodellierung robuster gestaltet.

Hierbei kann der Druckverhältnisgrenzwert bspw. zwischen 1,3 und 2,8 betragen.

Wenn die Fehlerabsicherung nicht greift, also das Druckverhältnis über den Verdichter größer als der Druckverhältnisgrenzwert ist und/oder der gemessene Verdichteraustrittsdruck gleich oder größer als der letzte gültige Verdichteraustrittsdruck, so entspricht der korrigierte Verdichteraustrittsdruck dem letzten gültigen Verdichteraustrittsdruck.

In weiteren Ausführungsformen kann die ermittelte Verdichteraustrittstemperatur tiefpassgefiltert sein. Durch das Tiefpassfiltern kann ein Signal, das die Verdichteraustrittstemperatur darstellt, stabilisiert werden und/oder ein Rauschen in dem Signal unterdrückt werden. Somit kann die Verdichteraustrittstemperatur genauer ermittelt werden.

Ein zweiter Aspekt der Erfindung betrifft ein Steuergerät, das eingerichtet ist, ein Verfahren gemäß den oben beschrieben Ausführungsformen auszuführen.

Ein dritter Aspekt der Erfindung betrifft ein Kraftfahrzeug mit dem oben beschrieben Steuergerät. Das Kraftfahrzeug ist eingerichtet und ausgebildet, ein Verfahren gemäß den oben beschrieben Ausführungsformen auszuführen.

Ausführungsbeispiele der Erfindung werden nun beispielhaft und unter Bezugnahme auf die beigefügte Zeichnung beschrieben. Dabei zeigt:

Fig. 1    schematisch ein Kraftfahrzeug gemäß einer Ausführungsform;

Fig. 2    ein Gesamtmodell zum Bestimmen einer Verdichtereintrittstemperatur und einer Verdichteraustrittstemperatur eines Fluids;

Fig. 3    ein Modell zum Bestimmen der Verdichtereintrittstemperatur;

Fig. 4    ein Modell zum Erkennen von Verdichterpumpen;

Fig. 5    ein Modell zur Druckbestimmung eines Verdichteraustrittsdrucks;

Fig. 6    ein Modell zum Bestimmen der Verdichteraustrittstemperatur; und

Fig. 7    schematisch ein Steuergerät gemäß einer Ausführungsform.

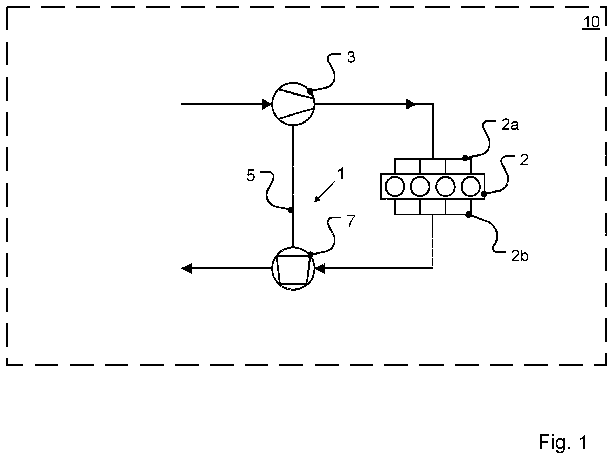

Fig. 1 zeigt ein Kraftfahrzeug 10 mit einer Verbrennungskraftmaschine 2 und einem Aufladungssystem 1. Das Aufladungssystem 1 umfasst einen Verdichter 3 und eine Turbine 7. Der Verdichter 3 ist mit der Turbine 7 über eine Welle 5 verbunden und somit von der Turbine 7 antreibbar.

Eine aus der Umgebung angesaugte Luft strömt über den Verdichter 3 und ein Saugrohr 2a in Zylinder der Verbrennungskraftmaschine 2. Das in den Zylindern entstehende Luft-KraftstoffGemisch wird zur Erzeugung einer (Fahrzeug-)Antriebsleistung verbrannt. Das aus der Verbrennung entstehende Abgas strömt über einen Abgaskrümmer 2b und die Turbine 7. Somit kann die Turbine 7 mit dem Abgas aus der Verbrennungskraftmaschine 2 versorgt und angetrieben werden. So kann die angesaugte Luft von dem Verdichter 3 verdichtet werden, je nach Leistung der Turbine 7.

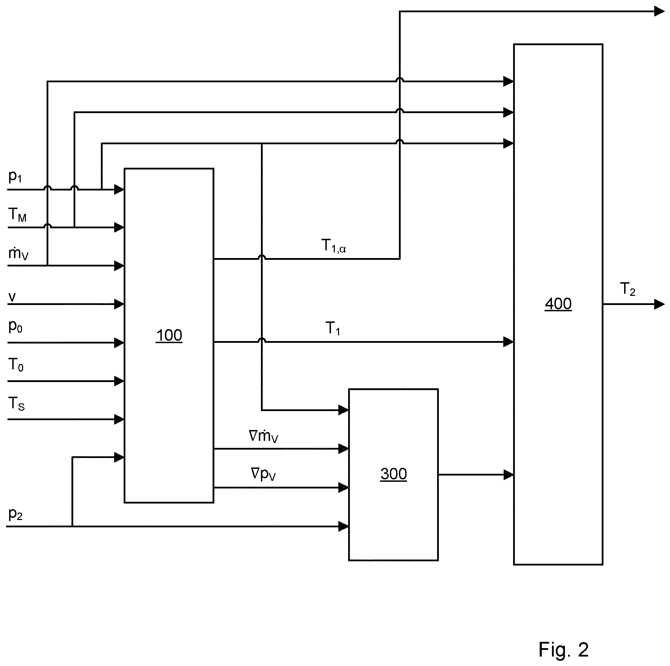

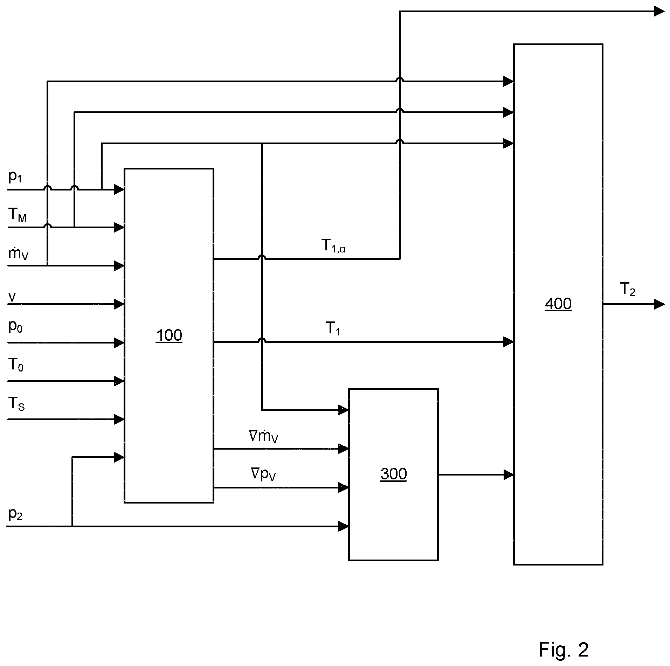

Fig. 2 bis 6 zeigen Modelle, die beim Ausführen einer Ausführungsform des erfindungsgemäßen Verfahrens verwendet werden.

Fig. 2 zeigt ein Gesamtmodell zum Bestimmen einer Verdichtereintrittstemperatur $T_{V,E,\alpha}$ und einer Verdichteraustrittstemperatur $T_{V,A}$ unter Berücksichtigung eines Verdichterpumpens. Das Gesamtmodell umfasst ein Verdichtereintrittstemperaturmodell 100, ein Druckbestimmungsmodell 300 und ein Verdichteraustrittstemperaturmodell 400.

In das Verdichtereintrittstemperaturmodell 100 gehen als Eingangsgrößen eine Motortemperatur $T_M$, eine Umgebungstemperatur $T_0$, eine Saugrohrtemperatur $T_S$, eine Fahrzeuggeschwindigkeit v, ein Umgebungsdruck $p_0$, ein Verdichtermassenstrom $\dot{m}_{ov}$ über den Verdichter 3, ein Verdichtereintrittsdruck $p_1$ (Druck vor dem Verdichter 3) und ein Verdichteraustrittsdruck $p_2$ (Druck nach dem Verdichter 3) ein. Diese Eingangsgrößen können bspw. über entsprechende fahrzeugseitige Erfassungseinrichtungen erfasst werden.

Als Ausgangsgrößen gehen aus dem Verdichtereintrittstemperaturmodell 100 eine Verdichtereintrittstemperatur $T_1$, die von einem Verdichterpumpen abhängige Verdichtereintrittstemperatur (korrigierte Verdichtereintrittstemperatur) $T_{1,\alpha}$, ein Massenstromgradient $\nabla \dot{m}$ über den Verdichter 3 und ein Druckgradient $\nabla p_V$ über den Verdichter 3 hervor. In dem Verdichtereintrittstemperaturmodell 100 wird die Verdichtereintrittstemperatur $T_{1,\alpha}$ mit einem von dem Verdichterpumpen abhängigen Korrekturfaktor $\Delta T_{VP,\alpha}$ ermittelt.

In das Druckkorrekturmodell 300 gehen als Eingangsgrößen der Massenstromgradient $\nabla \dot{m}$ und der Druckgradient $\nabla p_V$, der Druck $p_{V,E}$ vor dem Verdichter 3 und der Druck $p_{V,A}$ nach dem Verdichter 3 ein.

Als Ausgangsgröße geht aus dem Druckkorrekturmodell 300 ein korrigierter Verdichteraustrittsdruck $p_{2,\alpha}$ hervor.

In das Verdichteraustrittstemperaturmodell 400 gehen als Eingangsgrößen die Motortemperatur $T_M$, der Verdichtermassenstrom $\dot{m}_V$, der Verdichtereintrittsdruck $p_1$, der korrigierte Verdichteraustrittsdruck $p_{2,\alpha}$ und die (nicht korrigierte) Verdichtereintrittstemperatur $T_1$ ein.

Als Ausgangsgröße geht aus dem Verdichteraustrittstemperaturmodell 400 die Verdichteraustrittstemperatur $T_2$ hervor. In dem Verdichteraustrittstemperaturmodell 400 wird die Verdichteraustrittstemperatur $T_2$ basierend auf einem korrigierten Verdichteraustrittsdruck $p_{2,\alpha}$ ermittelt, der von dem Verdichterpumpen abhängt.

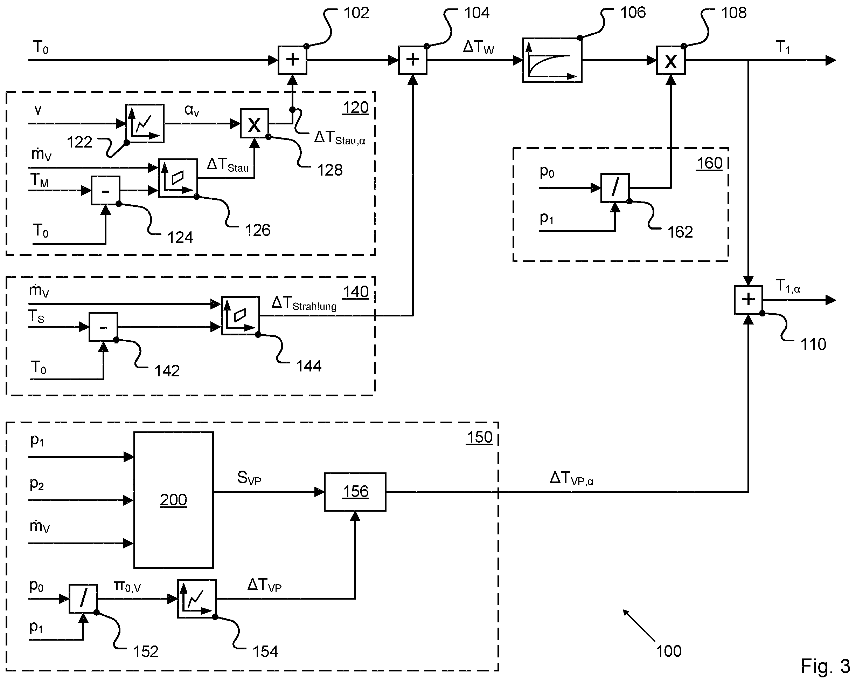

Fig. 3 zeigt das Verdichtereintrittstemperaturmodell 100 zum Bestimmen der Verdichtereintrittstemperatur $T_{1,\alpha}$ im Detail. Die ideale Gasgleichung stellt die physikalische Basis für das Verdichtereintrittstemperaturmodell 100 dar. Als Ausgang dient die Umgebungstemperatur $T_0$, die im neuen Ansatz durch Wärmestrahlung heißer Bauteile, bspw. die Verbrennungskraftmaschine 2 und das Saugrohr 2a, erwärmt wird. So umfasst das Verdichtereintrittstemperaturmodell 100 ein Stauwärmemodell 120 zur Berücksichtigung einer Stauwärme, ein Wärmestrahlungsmodell 140 zur Berücksichtigung von Wärmestrahlung, ein Temperaturkorrekturmodell 150 zur Berücksichtigung eines Temperaturanstiegs durch das Auftreten von Verdichterpumpen und ein Druckverhältniskorrekturmodell 160 zur Berücksichtigung von Umweltbedingungen in Form des Umgebungsdrucks.

In dem Stauwärmemodell 120 wird mit einer Kennlinie 122 aus der Fahrzeuggeschwindigkeit v ein Fahrzeuggeschwindigkeitskorrekturfaktor $\alpha_v$ ermittelt. Der Fahrzeuggeschwindigkeitskorrekturfaktor $\alpha_v$ berücksichtigt einen Einfluss der Fahrzeuggeschwindigkeit v auf die Stauwärme. Ferner wird im Subtraktionsblock 124 eine Differenz zwischen der Motortemperatur $T_M$ und der Umgebungstemperatur $T_0$ gebildet. Aus dieser Differenz und dem Verdichtermassenstrom $\dot{m}_v$ ist mit einem Kennfeld 126 ein Stauwärmetemperaturanstieg $\Delta T_{Stau}$ durch die Stauwärme ermittelbar. Im Multiplikationsblock werden der Fahrzeuggeschwindigkeitskorrekturfaktor $\alpha_v$ und der Stauwärmetemperaturanstieg $\Delta T_{Stau}$ miteinander multipliziert, um einen korrigierten Stauwärmetemperaturanstieg $\Delta T_{Stau,\alpha}$ zu erhalten, der die Fahrzeuggeschwindigkeit v berücksichtigt und einem Summationsblock 102 zugeführt wird.

In dem Wärmestrahlungsmodell 140 wird in einem Subtraktionsblock 142 eine Differenz zwischen Saugrohrtemperatur $T_S$ und der Umgebungstemperatur $T_0$ gebildet. Mit dem Kennfeld 144 ist aus dieser Differenz und dem Verdichtermassenstrom $\dot{m}_V$ ein Wärmestrahlungstemperaturanstieg $\Delta T_{Strahlung}$ durch Wärmestrahlung ermittelbar. Der Wärmestrahlungstemperaturanstieg $\Delta T_{Strahlung}$ wird einem Summationsblock 104 zugeführt und mit dem Ergebnis des Summationsblocks 102 addiert. Das Ergebnis des Summationsblocks 104 entspricht somit der Aufwärmung der Umgebungstemperatur $T_0$ durch Stauwärme und Wärmestrahlung.

Mit dem Stauwärmemodell 120 und dem Wärmestrahlungsmodell 140 werden die physikalischen Effekte beim Motorkaltstart und Stauwärme bei längeren Standzeiten berücksichtigt.

Das Ergebnis des Summationsblocks 104 ist ein Wärmeinflusstemperaturanstieg $\Delta T_W$ aufgrund von Wärmeeinflüssen, also vorliegend Stauwärme und/oder Wärmestrahlung. Dieser Temperaturanstieg $\Delta T_W$ wird einem (optionalen) Tiefpassfilter 106 zugeführt.

Das Druckverhältnis zwischen dem Umge-

bungsdruck $p_0$ und dem Verdichtereintrittsdruck $p_1$ wird in dem Druckverhältniskorrekturmodell 160 ermittelt und durch das Verdichtereintrittstemperaturmodell 100 berücksichtigt. Mit dem Druckverhältniskorrekturmodell 160 kann der Einfluss des Umgebungsdrucks auf die Wärmekapazität der Luft berücksichtigt werden. So wird in einem Multiplikationsblock 108 der Wärmeinflusstemperaturanstieg $\Delta T_W$ mit dem Druckverhältnis zwischen dem Umgebungsdruck $p_0$ und dem Verdichtereintrittsdruck $p_1$ für eine Dichtekorrektur multipliziert. Somit erhält man aus dem Multiplikationsblock 108 die (unkorrigierte) Verdichtereintrittstemperatur $T_1$. Die derart ermittelte Verdichteraustrittstemperatur $T_1$ berücksichtigt noch kein Auftreten des Verdichterpumpens.

Zur Berücksichtigung des Auftretens von Verdichterpumpen ist das Temperaturkorrekturmodell 150 vorgesehen. Das Temperaturkorrekturmodell 150 umfasst ein Verdichterpumpen-Erkennungsmodell 200, mit dem ein Auftreten von Verdichterpumpen erkannt werden kann. Eingangsseitig geht in das Verdichterpumpen-Erkennungsmodell 200 der Verdichtereintrittsdruck $p_1$, der Verdichteraustrittsdruck $p_2$ und der Verdichtermassenstrom $\dot{m}_V$ ein. Ausgangsseitig geht ein Signal $S_{PV}$ hervor, das ein Auftreten eines Verdichterpumpens angibt.

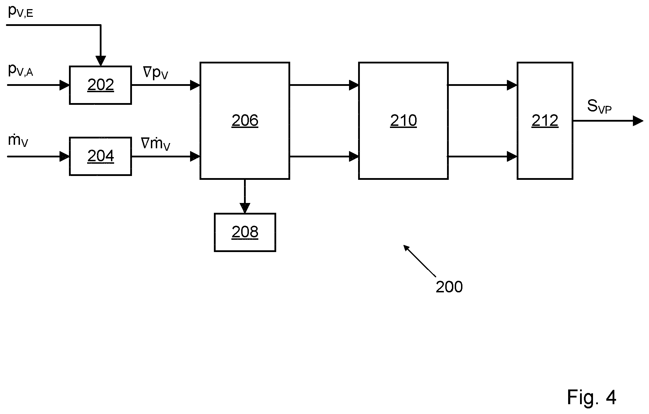

Das Verdichterpumpen-Erkennungsmodell 200 ist in Fig. 4 im Detail gezeigt. Charakteristisch für das Verdichterpumpen ist ein stark abfallender Massenstrom über den Verdichter 3 bei gleichzeitig (oder leicht verzögert auftretender) vergleichsweise starker Druckerhöhung nach dem Verdichter 3. Dieses Verhalten wird in dem Verdichterpumpen-Erkennungsmodell 200 zum Erkennen von Verdichterpumpen ausgenutzt.

In dem Verdichterpumpen-Erkennungsmodell 200 wird der Verdichtereintrittsdruck $p_1$ und der Verdichteraustrittsdruck $p_2$ einem Block 202 zum Ermitteln des Druckgradienten $\nabla p_V$ über den Verdichter 3 zugeführt. Ferner wird der Verdichtermassenstrom $\dot{m}_V$ einem Block 204 zum Ermitteln des $\nabla \dot{m}_V$ Massenstromgradienten zugeführt.

Im Block 206 werden die Ergebnisse der Gradientenberechnung aus den Blöcken 202, 204 gespeichert. Dabei können die Ergebnisse aus mehreren Berechnungen stammen. So können bspw. fünf Berechnung erfolgen. Die Gradientenberechnungen in den Blöcken 202, 204 können bspw. alle 5 bis 15 Millisekunden erfolgen. In manchen Ausführungsformen können die Gradientenberechnungen alle 10 Millisekunden erfolgen. Indem die Gradientenberechnungen über einen vorbestimmten Zeitraum, bspw. 50 Millisekunden, durchgeführt werden, können leicht verzögerte Abläufe der beschriebenen Charakteristika bei Pumpvorgängen berücksichtigt werden. Somit kann die Robustheit des Erkennens von Verdichterpumpen gesteigert werden.

Im Block 208 wird anhand des Druckgradienten $\nabla p_V$ über den Verdichter 3 ein maximaler Druckgradient $\nabla p_{V,max}$ ermittelt. Optional kann in dem Block 208 anhand des $\nabla \dot{m}_V$ Massenstromgradienten ein minimaler Massenstromgradient $\nabla \dot{m}_{V,min}$ ermittelt werden.

Im Block 210 werden der maximale Druckgradient $\nabla p_{V,max}$ und der minimale Massenstromgradient $\nabla \dot{m}_{V,min}$ gegen entsprechende Schwellen bzw. Grenzen geprüft. Überschreitet der maximale Druckgradient $\nabla p_{V,max}$ eine Druckgradientenobergrenze $\nabla p_{V,lim}$ und unterschreitet der minimale Massenstromgradient $\nabla \dot{m}_{V,min}$ eine Massenstromgradientenuntergrenze $\nabla \dot{m}_{V,lim}$, so wird in einem UND-Block 212 das Verdichterpumpen-Erkennungssignal $S_{VP}$ ausgegeben. In dem Block 212 wird also festgestellt, dass das Verdichterpumpen vorliegt, wenn der Druckgradient $\nabla p_V$ die Druckgradientenobergrenze $\nabla p_{V,lim}$ überschreitet und der Massenstromgradient $\nabla \dot{m}_{V,min}$ die Massenstromgradientenuntergrenze $\nabla \dot{m}_{V,lim}$ unterschreitet. Wie oben erwähnt, signalisiert das Verdichterpumpen-Erkennungssignal $S_{VP}$ ein Vorliegen/Auftreten von Verdichterpumpen durch den Verdichter 3.

Beim Verdichterpumpen entsteht ein Strömungsabriss, bei dem ein Rückströmen von heißer verdichteter Luft (vor dem Verdichter 3) stattfindet. Somit kommt es zu einem sprunghaften Verdichterpumpen-Temperaturanstieg $\Delta T_{VP}$ am Verdichtereintritt beim Pumpvorgang, wobei der sprunghafte Temperaturanstieg über die Zeit abnimmt. Der Verdichterpumpen-Temperaturanstieg $\Delta T_{VP}$ ist abhängig vom dem Verhältnis $\pi_{0,V}$ zwischen dem Umgebungsdruck $p_0$ und dem Verdichtereintrittsdruck $p_1$, wobei das Verhältnis in dem Block 152 ermittelt wird. Der Zusammenhang zwischen Verdichterpumpen-Temperaturanstieg $\Delta T_{VP}$ und dem Verhältnis $\pi_{0,V}$ ist in einer Kennlinie 154 abgelegt.

Der Verdichterpumpen-Temperaturanstieg $\Delta T_{VP}$ steigt zunächst sprunghaft an und nimmt dann über die Zeit ab. Daher weist der Verdichterpumpen-Temperaturanstieg $\Delta T_{VP}$ ein Verhalten auf, das mit einem Differenzierer mit Verzögerung erster Ordnung (DT1) modellierbar ist. Dieses Verhalten kann als Korrektur abgebildet werden. Dazu weist das Temperaturkorrekturmodell 150 einen Block 156 auf, bei dem eingangsseitig der Verdichterpumpen-Temperaturanstieg $\Delta T_{VP}$ und das Verdichterpumpen-Erkennungssignal $S_{VP}$ eingehen. Der Block 156 modelliert ein DT1-Verhalten. Mit anderen Worten, der Block 156 umfasst ein DT1-Glied. Aus dem Block 156 geht ausgangsseitig ein korrigierter Verdichter-Temperaturanstieg $\Delta T_{VP,\alpha}$ hervor. Der korrigierte Verdichter-Temperaturanstieg $\Delta T_{VP,\alpha}$ ist somit der von dem Verdichterpumpen abhängige Temperaturkorrekturfaktor.

Im Summationsblock 110 wird die Verdichtereintrittstemperatur $T_1$ mit dem korrigierten Verdichter-Temperaturanstieg $\Delta T_{VP,\alpha}$ summiert, um eine korrigierte Verdichtereintrittstemperatur $T_{1,\alpha}$ zu ermitteln. Die korrigierte Verdichtereintrittstemperatur $T_{V,E,\alpha}$ entspricht einer Verdichtereintrittstemperatur unter Berücksichtigung des Verdichterpumpens.

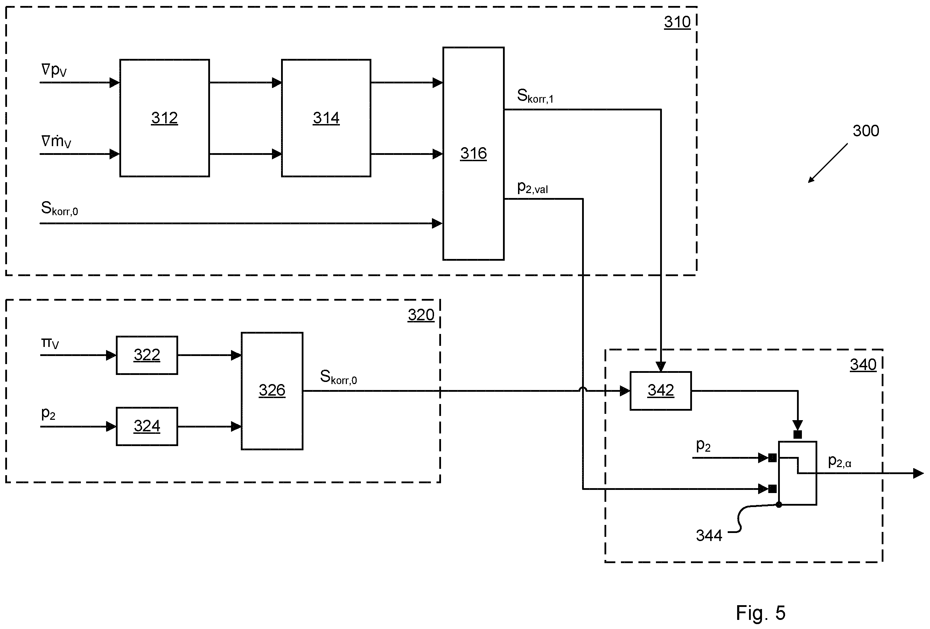

In Fig. 5 ist das Druckbestimmungsmodell 300 im Detail gezeigt. Die auftretenden Druckspitzen beim Verdichterpumpen werden durch das Schließen der Drosselklappe hervorgerufen und haben keinen physikalischen Einfluss auf die isentrope Verdichtung. Aus diesem Grund kann mit Hilfe des Druckbestimmungsmodells 300 ein korrigierter Verdichteraustrittsdruck $p_{2,\alpha}$ ermittelt werden.

So wird zunächst im Block 310 geprüft, ob eine Druckkorrektur aktiviert werden soll.

Dazu werden im Block 312 die Ergebnisse der Gradientenberechnungen aus den Blöcken 202, 204 gespeichert. Dabei können die Ergebnisse aus mehreren Berechnungen stammen. Ferner werden im Block 312 der maximale Druckgradient $\nabla p_{V,max}$ und der minimale Massenstromgradient $\nabla \dot{m}_{V,min}$ ermittelt. Im Block 314 werden der maximale Druckgradient $\nabla p_{V,max}$ und der minimale Massenstromgradient $\nabla \dot{m}_{V,min}$ gegen entsprechende Schwellen bzw. Grenzen geprüft.

Im UND-Block 316 wird Folgendes geprüft:

- Überschreiten des maximalen Druckgradienten $\nabla p_{V,max}$ der Druckgradientenobergrenze $\nabla p_{V,lim}$;
- Unterschreiten des minimalen Massenstromgradienten $\nabla \dot{m}_{V,min}$ der Massenstromgradientenuntergrenze $\nabla \dot{m}_{V,lim}$; und
- Vorliegen eines Druckkorrekturdeaktivierungssignals $S_{korr,0}$

Wenn die obigen drei Bedingungen bejaht werden, so geht aus dem UND-Block 316 ausgangsseitig ein Druckkorrekturaktivierungssignal $S_{korr,1}$ und ein letzter gültiger Druckwert $p_{2,val}$ für den Verdichteraustrittsdruck hervor. Der letzte gültige Verdichteraustrittsdruck $p_{2,val}$ ist derjenige, der vor dem Auftreten des Verdichterpumpens vorliegt. Anders ausgedrückt, der letzte gültige Verdichteraustrittsdruck $p_{2,val}$ ist der Wert für den Verdichteraustrittsdruck $p_2$, bevor es zu einem Anstieg des Verdichteraustrittsdrucks $p_2$ wegen des Verdichterpumpens kommt.

Da die Blöcke 312, 314 und 316 im Prinzip auf das Erkennen des Verdichterpumpens gerichtet sind, kann alternativ zu den Ausgangsgrößen aus den Blöcken 312, 314 im Block 316 auf ein Vorliegen des Verdichterpumpen-Erkennungssignals $S_{VP}$ aus dem Verdichterpumpen-Erkennungsmodell 200 geprüft werden.

Das Druckkorrekturmodell 300 umfasst eine Fehlerabsicherung 320, die zwei Randbedingungen nutzt. Zum einen muss der korrigierte Verdichteraustrittsdruck $p_{2,\alpha}$ kleiner als der gemessener Verdichteraustrittsdruck $p_2$ sein. Zum anderen tritt Verdichterpumpen nur bei einem hohen Druckverhältnis $\pi_V$ über den Verdichter 3 auf. Sinkt dieses unter einen minimalen Druckverhältnisgrenzwert $\pi_{V,lim}$, wird die Druckkorrektur beendet.

Dazu wird im Block 322 der Fehlerabsicherung 320 ermittelt, ob das Druckverhältnis $\pi_V$ über den Verdichter 3, also der Verdichteraustrittsdruck $p_2$ geteilt durch den Verdichtereintrittsdruck $p_1$, kleiner als der Druckverhältnisgrenzwert $\pi_{V,lim}$ ist. Dabei kann der Druckverhältnisgrenzwert $\pi_{V,lim}$ bspw. zwischen 1,3 und 2,8 betragen.

Im Block 324 wird ermittelt, ob der gemessene Verdichteraustrittsdruck $p_2$ kleiner als der letzte gültige Verdichteraustrittsdruck $p_{V,A,val}$ ist.

Wenn das Druckverhältnis $\pi_V$ kleiner als der Druckverhältnisgrenzwert $\pi_{V,lim}$ ist und der Verdichteraustrittsdruck $p_2$ kleiner als der letzte gültige Verdichteraustrittsdruck $p_{2,val}$, dann geht aus einem UND-Block 326 ausgangsseitig ein Druckkorrekturdeaktivierungssignal $S_{korr,0}$ hervor.

Im Block 340 wird ermittelt, ob die Druckkorrektur erfolgt. Anders ausgedrückt, im Block 340 wird ermittelt, welchen Wert der korrigierte Verdichteraustrittsdruck $p_{2,\alpha}$ annimmt. Dazu geht eingangsseitig in den Block 342 das Druckkorrekturaktivierungssignal $S_{korr,1}$ aus dem Block 310 und ggf. das Druckkorrekturdeaktivierungssignal $S_{korr,0}$ aus der Fehlerabsicherung 320. Wenn das Druckkorrekturdeaktivierungssignal $S_{korr,0}$ eingangsseitig am Block 342 vorliegt, so geht das Druckkorrekturdeaktivierungssignal $S_{korr,0}$ auch ausgangsseitig aus dem Block 342 hervor. Ergibt sich aus der Fehlerabsicherung 320 kein Druckkorrekturdeaktivierungssignal $S_{korr,0}$ und liegt eingangsseitig am Block 342 nur das Druckkorrekturaktivierungssignal $S_{korr,1}$ vor, geht aus dem Block 342 das Druckkorrekturaktivierungssignal $S_{korr,1}$ ausgangsseitig hervor. Die Ausgangsgröße des Blocks 342 wird einem Schalter 344 zugeführt.

Aus dem Schalter 344 geht ausgangsseitig der korrigierte Verdichteraustrittsdruck $p_{2,\alpha}$ hervor. Wenn das Druckkorrekturaktivierungssignal $S_{korr,1}$ in dem Schalter 344 eingangsseitig vorliegt, so entspricht der korrigierte Verdichteraustrittsdruck $p_{2,\alpha}$ dem letzten gültigen Verdichteraustrittsdruck $p_{2,val}$. Wenn das Druckkorrekturdeaktivierungssignal $S_{korr,0}$ in dem Schalter 344 eingangsseitig vorliegt, so entspricht der Verdichteraustrittsdruck $p_{2,\alpha}$ dem gemessenen Verdichteraustrittsdruck $p_2$.

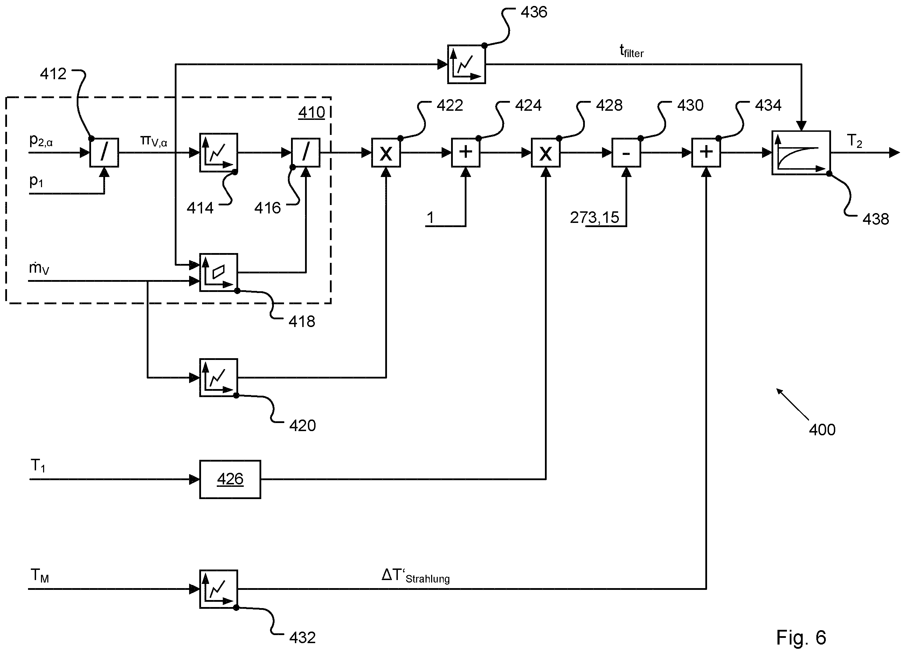

In Fig. 6 ist das Verdichteraustrittstemperaturmodell 400 im Detail gezeigt. Die Temperaturmodellierung am Austritt des Verdichters basiert auf der zuvor beschriebenen Verdichtereintrittstemperatur $T_1$, bei der die Temperaturerhöhung aufgrund von Verdichterpumpen ausgeklammert wird, der isentropen Verdichtung und Korrekturen, z. B. zur Berücksichtigung des Motorkaltstarts. Die Ausklammerung der Temperaturerhöhung aufgrund von Verdichterpumpen ist notwendig, weil beim Verdichterpumpen eine Umkehrung der Flussrichtung des Massenstroms durch den Verdichter 3 auftritt. Demzufolge ist ein kausaler Zusammenhang zwischen der Verdichteraustrittstemperatur $T_2$ und der Verdichtereintrittstemperatur $T_1$ nicht mehr gegeben und eine Korrektur der Verdichtereintrittstemperatur $T_1$ wird notwendig. Das liegt daran, dass chaotische Zustände über dem Verdichter 3 vorliegen. So wird durch eine Rückströmung die Verdichtereintrittstemperatur $T_1$ erhöht. Da aber kaum noch Verdichterleistung eingebracht wird, erwärmt sich die Verdichteraustrittstemperatur $T_2$ nicht mehr wesentlich. Daher werden die Einflüsse des Verdichterpumpens bei der Bestimmung der Verdichtereintrittstemperatur $T_1$ berücksichtigt.

Im Verdichteraustrittstemperaturmodell 400 wird in einem Block 410 zunächst folgende Ausgangsgröße ermittelt:

$$\frac{\left(\frac{p_{2,\alpha}}{p_1}\right)^{\frac{\kappa-1}{\kappa}}}{\eta_V}$$

Dazu wird im Block 412 ein korrigiertes Druckverhältnis $\pi_{V,\alpha}$ über den Verdichter 3 ermittelt, das einem Verhältnis von dem korrigierten Verdichteraustrittsdruck $p_{2,\alpha}$ geteilt durch den Verdichtereintrittsdruck $p_1$ entspricht. In einem Verdichtungsmodell 414 ist der Zusammenhang zwischen dem Isentropenexponenten $\kappa$ und dem korrigierten Druckverhältnis $\pi_{V,\alpha}$ abgelegt. Somit wird mit dem korrigierten Druckverhältnis $\pi_{V,\alpha}$ und dem Isentropenexponent $\kappa$ der isentrope Verdichtungsterm $\left(\frac{p_{2,\alpha}}{p_1}\right)^{\frac{\kappa-1}{\kappa}}$ als Ausgangsgröße aus dem Verdichtungsmodell 414 ermittelt.

Unter Kenntnis des Verdichtermassenstroms $\dot{m}_V$ und des korrigierten Druckverhältnisses $\pi_{V,\alpha}$ wird mit einem Verdichterwirkungsgrad-Kennfeld 418 der Verdichterwirkungsgrad $\eta_V$ ermittelt.

Im Block 416 wird der isentrope Verdichtungsterm $\left(\frac{p_{2,\alpha}}{p_1}\right)^{\frac{\kappa-1}{\kappa}}$ durch den Verdichterwirkungsgrad $\eta_V$ geteilt, so dass man die oben erwähnte Ausgangsgröße des Blocks 410 erhält.

Mit einem verdichteraustrittsseitigen Wandwärmeverlust-Kennfeld 420 wird unter Kenntnis des Verdichtermassenstroms $\dot{m}_V$ ein Wandwärmeverlustkorrekturfaktor $\alpha_{konv}$ ermittelt, der dann im Multiplikationsblock 422 mit dem Ergebnis des Blocks 416 multipliziert wird, so dass ausgangsseitig aus dem Multiplikationsblock 422 ein Faktor hervorgeht, der einen Einfluss der Verdichtung und von Wandwärmeverlusten auf die Verdichteraustrittstemperatur $T_2$ berücksichtigt.

Im optionalen Block 426 wird die Temperatureinheit der Verdichtereintrittstemperatur $T_1$ (ohne Berücksichtigung von Verdichterpumpen) von Grad Celsius in Kelvin umgewandelt.

Im Summationsblock 424 wird auf die Ausgangsgröße des Blocks 422 der Wert "1" aufaddiert.

Im Multiplikationsblock 428 wird die in Kelvin umgewandelte Verdichtereintrittstemperatur $T_1$ mit der Ausgangsgröße des Blocks 424 multipliziert.

Im Subtraktionsblock 430 wird die Ausgangsgröße des Blocks 428, deren Temperatureinheit in Kelvin angegeben ist, in Grad Celsius umgerechnet.

Unter Kenntnis der Motortemperatur $T_M$ wird mit einem verdichteraustrittsseitigen Wärmestrahlung-Kennfeld 432 ein verdichteraustrittsseitiger Wärmestrahlungstemperaturanstieg $\Delta T'_{Strahlung}$ aufgrund von Wärmestrahlung ermittelt.

Die Temperaturerhöhung wird im Summationsblock 434 auf die Ausgangsgröße des Blocks 430 aufaddiert.

Optional wird unter Kenntnis des korrigierten Druckverhältnisses $\pi_{V,\alpha}$ eine Filterzeit $t_{filter}$ zur Dynamikformung mit einem Filterzeit-Kennfeld 436 ermittelt.

Die Filterzeit $t_{filter}$ wird in der (optionalen) Tiefpassfilterung 438 verwendet. Mit der Tiefpassfilterung 438 in Abhängigkeit der Filterzeit $t_{filter}$ kann das Verdichteraustrittstemperaturmodell 400 dynamisch ausgebildet werden.

Ausgangsseitig geht aus der Tiefpassfilterung 438 die (modellierte) Verdichteraustrittstemperatur $T_2$ hervor. Dabei berücksichtigt das Verdichteraustrittstemperaturmodell 400 ein etwaig auftretendes Verdichterpumpen.

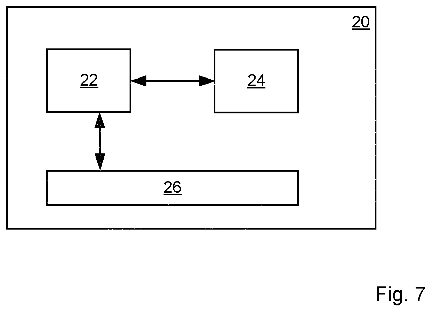

Fig. 7 zeigt schematisch ein beispielhaftes Steuergerät 20, das eingerichtet ist, die oben beschriebenen Verfahren/Modelle auszuführen. Das Steuergerät 20 umfasst einen Prozessor 22, einen Speicher 24 und eine Schnittstelle 26. Der Speicher 24 dient dazu, Daten wie bspw. die oben erwähnten Kennfelder, Kennlinien bzw. Modellen 122, 126, 144, 154, 414, 418, 420, 432, 436 zu speichern. Diese Kennfelder und Kennlinien können zuvor an Prüfständen ermittelt worden sein. Ferner ist in dem Speicher 24 auch Software hinterlegt, die dazu ausgelegt ist, die oben beschriebenen Verfahren auszuführen. Der Prozessor 22 ist dazu ausgelegt, Programminstruktionen der Software auszuführen. Die Schnittstelle 26 ist ferner dazu ausgelegt, Daten zu empfangen und auszusenden. Es kann sich bspw. um eine Schnittstelle zu einem CAN-Bus des Kraftfahrzeugs 10 handeln, über den das Steuergerät Messwerte von Sensoren, wie bspw. die Eingangsgrößen für das Verdichtereintrittstemperaturmodell 100 und dergleichen empfängt und Steuerbefehle aussendet.

**Bezugszeichenliste**

| | |
|---|---|
| 1 | Abgasturbolader |
| 2 | Verbrennungskraftmaschine |
| 2a | Saugrohr |
| 2b | Abgaskrümmer |
| 3 | Verdichter |
| 5 | Welle |
| 7 | Turbine |
| 10 | Kraftfahrzeug |
| 100 | Verdichtereintrittstemperaturmodell |
| 102, 104 | Summationsblock |
| 106 | Tiefpassfilter |
| 108 | Multiplikationsblock |
| 110 | Summationsblock |
| 120 | Stauwärmemodell |
| 122 | Kennlinie |

| 124 | Subtraktionsblock |
|---|---|
| 126 | Kennfeld |
| 128 | Multiplikationsblock |
| 140 | Wärmestrahlungsmodell |
| 142 | Subtraktionsblock |
| 144 | Kennfeld |
| 150 | Temperaturkorrekturmodell |
| 152 | Divisionsblock |
| 154 | Kennlinie |
| 156 | Modellierung des sprunghaften und dann abnehmenden Temperaturanstiegs durch Verdichterpumpen |
| 160 | Druckverhältniskorrekturmodell |
| 200 | Verdichterpumpen-Erkennungsmodell |
| 202 | Druckgradientenberechnung |
| 204 | Massenstromgradientenberechnung |
| 206 | Speichern der Ergebnisse aus Druckgradienten- und Massenstromgradientenberechnung |
| 208 | Ermitteln eines maximalen Druckgradienten und optional eines minimalen Massenstromgradienten |
| 210 | Schwellenprüfung |
| 212 | UND-Block |
| 300 | Druckbestimmungsmodell |
| 310 | Überprüfung der Druckkorrekturaktivierung |
| 312 | Speichern der Ergebnisse aus Druckgradienten- und Massenstromgradientenberechnung |
| 314 | Schwellenprüfung |
| 316 | UND-Block |
| 320 | Fehlerabsicherung |
| 322 | Vergleichen eines Druckverhältnisses über den Verdichter gegen einen Druckverhältnisgrenzwert |
| 324 | Vergleichen eines Verdichteraustrittsdrucks gegen einen letzten gültigen Verdichteraustrittsdruck |
| 326 | UND-Block |
| 340 | Ermitteln eines korrigierten Verdichteraustrittsdrucks |
| 342 | Überprüfung der Druckkorrekturaktivierung |
| 344 | Schalter |
| 400 | Verdichteraustrittstemperaturmodell |
| 412 | Divisionsblock |
| 414 | Verdichtungsmodell |
| 416 | Divisionsblock |
| 418 | Kennfeld |
| 420 | Kennlinie |
| 422 | Multiplikationsblock |
| 424 | Summationsblock |
| 426 | Temperatureinheitsumwandlung |
| 428 | Multiplikationsblock |
| 430 | Subtraktionsblock |
| 432 | Kennlinie |
| 434 | Summationsblock |
| 436 | Kennlinie |
| 438 | Tiefpassfilter |

| $\alpha_V$ | Fahrzeuggeschwindigkeitskorrekturfaktor |
|---|---|
| $\Delta T_{stau}$ | Wärmestautemperaturanstieg |
| $\Delta T_{stau,\alpha}$ | korrigierter Wärmestautemperaturanstieg |
| $\Delta T_{strahlung}$ | Wärmestrahlungstemperaturanstieg |
| $\Delta T'_{strahlung}$ | verdichteraustrittsseitiger Wärmestrahlungstemperaturanstieg |
| $\Delta T_{VP}$ | Verdichterpumpen-Temperaturanstieg |
| $\Delta T_{VP,\alpha}$ | korrigierter Verdichterpumpen-Temperaturanstieg / Temperaturkorrekturfaktor |
| $\Delta T_W$ | Wärmeinflusstemperaturanstieg |
| $\nabla \dot{m}_V$ | Massenstromgradient über den Verdichter |
| $\nabla p_V$ | Druckgradient über den Verdichter |
| $\pi_V$ | Druckverhältnis über den Verdichter |
| $\pi_{V,\alpha}$ | korrigiertes Druckverhältnis über den Verdichter |
| $\pi_{0,V}$ | Druckverhältnis zwischen Verdichtereintrittsdruck und Umgebungsdruck |
| $\dot{m}_V$ | Massenstrom über Verdichter |
| $p_0$ | Umgebungsdruck |
| $p_1$ | Verdichtereintrittsdruck |
| $p_2$ | Verdichteraustrittsdruck |
| $p_{2,val}$ | letzter gültiger Verdichteraustrittsdruck |
| $S_{korr,1}$ | Druckkorrekturaktivierungssignal |
| $S_{korr,0}$ | Druckkorrekturdeaktivierungssignal |
| $S_{VP}$ | Verdichterpumpen-Erkennungssignal |
| $T_0$ | Umgebungstemperatur |
| $T_1$ | Verdichtereintrittstemperatur |
| $T_{1,\alpha}$ | korrigierte Verdichtereintrittstemperatur |
| $T_2$ | Verdichteraustrittstemperatur |
| $t_{filter}$ | Filterzeitkonstante |
| $T_M$ | Verbrennungskraftmaschine-/Motortemperatur |
| $T_S$ | Saugrohrtemperatur |
| $v$ | Fahrzeuggeschwindigkeit |

**Patentansprüche**

1.  Verfahren zum Modellieren einer Verdichtereintrittstemperatur unter Berücksichtigung eines Verdichterpumpens, wobei das Verfahren durch ein Steuergerät (20) ausgeführt wird und folgende Schritte umfasst:

    - Ermitteln eines Druckgradienten ($\nabla p_V$) über den Verdichter (3);
    - Ermitteln eines Massenstromgradienten ($\nabla \dot{m}_{V,min}$) über den Verdichter (3);
    - Feststellen, dass das Verdichterpumpen vorliegt, wenn der Druckgradient ($\nabla p_V$) eine Druckgradientenobergrenze ($\nabla p_{V,lim}$) überschreitet und der Massenstromgradient ($\nabla \dot{m}_{V,min}$) eine Massenstromgradientenuntergrenze ($\nabla \dot{m}_{V,lim}$) unterschreitet; und
    - Ermitteln der Verdichtereintrittstemperatur ($T_{1,\alpha}$) mit einem von dem Verdichterpumpen abhängigen Temperaturkorrekturfaktor ($\Delta T_{VP,\alpha}$), wobei der Temperaturkorrekturfaktor ($\Delta T_{VP,\alpha}$) basierend auf einem Verdichterpum-

pen-Temperaturanstieg ($\Delta T_{VP}$) und der Verdichterpumpen-Temperaturanstieg ($\Delta T_{VP}$) basierend auf einem Druckverhältnis ($\pi_{0,V}$) zwischen Umgebungsdruck ($p_0$) und einem Verdichtereintrittsdruck ($p_1$) ermittelt wird.

2. Verfahren zum Modellieren einer Verdichteraustrittstemperatur eines Verdichters (3) unter Berücksichtigung eines Verdichterpumpens, wobei das Verfahren durch Steuergerät (20) ausgeführt wird und folgende Schritte umfasst:

- Ermitteln eines Druckgradienten ($\nabla p_V$) über den Verdichter (3);
- Ermitteln eines Massenstromgradienten ($\nabla \dot{m}_{V,min}$) über den Verdichter (3);
- Feststellen, dass das Verdichterpumpen vorliegt, wenn der Druckgradient ($\nabla p_V$) eine Druckgradientenobergrenze ($\nabla p_{V,lim}$) überschreitet und der Massenstromgradient ($\nabla \dot{m}_{V,min}$) eine Massenstromgradientenuntergrenze ($\nabla \dot{m}_{V,lim}$) unterschreitet; und
- Ermitteln der Verdichteraustrittstemperatur ($T_2$) basierend auf einem korrigierten Verdichteraustrittsdruck ($p_{2,\alpha}$), der von dem Verdichterpumpen abhängt, wobei die ermittelte Verdichteraustrittstemperatur ($T_2$) auf einer unkorrigierten Verdichtereintrittstemperatur ($T_1$) basiert, die einen Einfluss des Verdichterpumpens auf die Verdichtereintrittstemperatur ($T_1$) unberücksichtigt lässt, wobei die Verdichtereintrittstemperatur ($T_1$) basierend auf einem Druckverhältnis ($\pi_{0,V}$) zwischen Umgebungsdruck ($p_0$) und einem Verdichtereintrittsdruck ($p_1$) korrigiert wird.

3. Verfahren nach Anspruch 1 oder 2, wobei der Druckgradient ($\nabla pV$) einem maximalen Druckgradienten ($\nabla pV,max$) über einen vorbestimmen Zeitraum entspricht und/oder der Massenstromgradient ($\nabla \dot{m}V,min$) einem minimalen Massenstromgradienten ($\nabla \dot{m}V,min$) über den vorbestimmten Zeitraum.

4. Verfahren nach Anspruch 1 oder, wenn abhängig von Anspruch 1, nach Anspruch 3, wobei das Ermitteln der Verdichtereintrittstemperatur ($T_1$, $T_{1,\alpha}$) Wärmeübertragungseinflüsse berücksichtigt, wobei die Wärmeübertragungseinflüsse mindestens eines von Wandwärmeverlusten, Stauwärme und von heißen Bauteilen ausgehende Wärmestrahlungen umfasst.

5. Verfahren nach Anspruch 2 oder, wenn abhängig von Anspruch 2, nach Anspruch 3, wobei das Ermitteln der Verdichteraustrittstemperatur ($T_2$) Wärmeübertragungseinflüsse berücksichtigt, wobei die Wärmeübertragungseinflüsse mindestens eines von Wandwärmeverlusten, Stauwärme und von heißen Bauteilen ausgehende Wärmestrahlungen umfasst.

6. Verfahren nach einem der Ansprüche 4 und 5, wobei die Wärmeübertragungseinflüsse mit mindestens eines von Kennlinien und Kennfeldern bestimmt werden.

7. Verfahren nach einem der Ansprüche 1, 3, 4, und 6, wobei der Verdichterpumpen-Temperaturanstieg ($\Delta T_{VP}$) mit einem Differenzierer mit Verzögerung erster Ordnung modelliert wird.

8. Verfahren nach einem der Ansprüche 2, 3, 5 und 6, wobei die unkorrigierte Verdichtereintrittstemperatur ($T_1$) tiefpassgefiltert wird.

9. Verfahren nach einem der Ansprüche 2, 3, 5, 6 und 8, wobei zur Fehlerabsicherung der korrigierte Verdichteraustrittsdruck ($p_{V,A,\alpha}$) einem gemessenen Verdichteraustrittsdruck ($p_{V,A}$) entspricht, wenn ein Druckverhältnis ($R_V$) über den Verdichter (3) kleiner als ein Druckverhältnisgrenzwert ($\pi_{V,lim}$) ist und ein Verdichteraustrittsdruck ($p_{V,A}$) kleiner als ein letzter gültiger Verdichteraustrittsdruck ($p_{V,A,val}$).

10. Verfahren nach einem der vorherigen Ansprüche, wobei die Verdichteraustrittstemperatur ($T_2$) tiefpassgefiltert ist.

11. Steuergerät (20), das eingerichtet ist, ein Verfahren nach einem der Ansprüche 1 bis 10 auszuführen.

12. Kraftfahrzeug (10) mit einem Steuergerät (20) nach Anspruch 11, wobei das Kraftfahrzeug (10) eingerichtet und ausgebildet ist, ein Verfahren nach einem der Ansprüche 1 bis 10 auszuführen.

**Claims**

1. Method for modeling a compressor inlet temperature by taking a surge into account, wherein the method is executed by a control device (20) and comprises the following steps:

- determining a pressure gradient (Vpv) across the compressor (3);
- determining a mass flow gradient ($\nabla \dot{m}_{V,min}$) across the compressor (3);
- ascertaining that the surge is occurring when the pressure gradient ($\nabla p_V$) exceeds a pressure gradient upper limit ($\nabla p_{V,lim}$); and the mass flow gradient ($\nabla \dot{m}_{V,min}$) falls below a mass flow gradient lower limit ($\nabla \dot{m}_{V,lim}$); and
- determining the compressor inlet temperature ($T_{1,\alpha}$) using a surge-dependent temperature correction factor ($\Delta T_{VP,\alpha}$), wherein the tempera-

ture correction factor ($\Delta T_{VP,\alpha}$) is determined on the basis of a surge temperature increase ($\Delta T_{VP}$) and the surge temperature increase ($\Delta T_{VP}$) is determined on the basis of a pressure ratio ($\pi_{0,V}$) between ambient pressure ($p_0$) and a compressor inlet pressure ($p_1$).

2. Method for modeling a compressor outlet temperature of a compressor (3) by taking a surge into account, wherein the method is executed by a control device (20) and comprises the following steps:

   - determining a pressure gradient (Vpv) across the compressor (3);
   - determining a mass flow gradient ($\nabla \dot{m}_{V,min}$) across the compressor (3);
   - ascertaining that the surge is occurring when the pressure gradient ($\nabla p_V$) exceeds a pressure gradient upper limit ($\nabla p_{V,lim}$) and the mass flow gradient ($\nabla \dot{m}_{V,min}$) falls below a mass flow gradient lower limit ($\nabla \dot{m}_{V,lim}$); and
   - determining the compressor outlet temperature ($T_2$) on the basis of a surge-dependent corrected compressor outlet pressure ($p_{2,\alpha}$), wherein the determined compressor outlet temperature ($T_2$) is based on an uncorrected compressor inlet temperature ($T_1$) that does not take an influence of the surge on the compressor inlet temperature ($T_1$) into account, wherein the compressor inlet temperature ($T_1$) is corrected on the basis of a pressure ratio ($\pi_{0,V}$) between ambient pressure ($p_0$) and a compressor inlet pressure ($p_1$).

3. Method according to claim 1 or claim 2, wherein the pressure gradient (VpV) corresponds to a maximum pressure gradient (VpV,max) over a predetermined period and/or the mass flow gradient ($\nabla \dot{m}$V,min) corresponds to a minimum mass flow gradient (VrhV,min) over the predetermined period.

4. Method according to claim 1 or, when dependent on claim 1, according to claim 3, wherein determining the compressor inlet temperature ($T_1$, $T_{1,\alpha}$) takes heat transfer influences into account, wherein the heat transfer influences include at least one of wall heat losses, heat build-up and heat radiation being emitted from hot components.

5. Method according to claim 2 or, when dependent on claim 2, according to claim 3, wherein determining the compressor outlet temperature ($T_2$) takes heat transfer influences into account, wherein the heat transfer influences include at least one of wall heat losses, heat build-up and heat radiation being emitted from hot components.

6. Method according to any of claims 4 and 5, wherein the heat transfer influences are identified using at least one of characteristic curves and characteristic maps.

7. Method according to any of claims 1, 3, 4, and 6, wherein the surge temperature increase ($\Delta T_{VP}$) is modeled using a first-order lag differentiator.

8. Method according to any of claims 2, 3, 5 and 6, wherein the uncorrected compressor inlet temperature ($T_1$) is low-pass filtered.

9. Method according to any of claims 2, 3, 5, 6 and 8, wherein, to protect against errors, the corrected compressor outlet pressure ($p_{V,A,\alpha}$) corresponds to a measured compressor outlet pressure ($P_{V,A}$) when a pressure ratio (Rv) across the compressor (3) is less than a pressure ratio limit value ($\pi_{V,lim}$) and a compressor outlet pressure ($p_{V,A}$) is smaller than a last valid compressor outlet pressure (PV,A,val).

10. Method according to any of the preceding claims, wherein the compressor outlet temperature ($T_2$) is low-pass filtered.

11. Control device (20) configured to execute a method according to any of claims 1 to 10.

12. Motor vehicle (10) having a control device (20) according to claim 11, wherein the motor vehicle (10) is configured and designed to execute a method according to any of claims 1 to 10.

**Revendications**

1. Procédé de modélisation d'une température d'entrée de compresseur en tenant compte d'un pompage de compresseur, dans lequel le procédé est mis en œuvre par un appareil de commande (20) et comprend les étapes suivantes :

   - détermination d'un gradient de pression (Vpv) à travers le compresseur (3) ;
   - détermination d'un gradient de débit massique ($\nabla \dot{m}_{V,min}$) à travers le compresseur (3) ;
   - détermination qu'il y a pompage de compresseur lorsque le gradient de pression (Vpv) est supérieur à une limite supérieure de gradient de pression ($\nabla p_{V,lim}$) ; et le gradient de débit massique ($\nabla \dot{m}_{V,min}$) est inférieur à une limite inférieure de gradient de débit massique ($\nabla \dot{m}_{V,lim}$); et
   - détermination de la température d'entrée de compresseur ($T_{1,\alpha}$) avec un facteur de correction de température ($\Delta T_{VP,\alpha}$) dépendant du pompage de compresseur, dans lequel le facteur de correction de température ($\Delta T_{VP,\alpha}$) est déter-

miné sur la base d'une augmentation de température de pompage de compresseur ($\Delta T_{VP}$) et l'augmentation de température de pompage de compresseur ($\Delta T_{VP}$) est déterminée sur la base d'un rapport de pression ($\pi_{0,V}$) entre la pression ambiante ($p_0$) et une pression d'entrée de compresseur ($p_1$).

2. Procédé de modélisation d'une température de sortie de compresseur d'un compresseur (3) en tenant compte d'un pompage de compresseur, dans lequel le procédé est mis en œuvre par un appareil de commande (20) et comprend les étapes suivantes :

   - détermination d'un gradient de pression (Vpv) à travers le compresseur (3) ;
   - détermination d'un gradient de débit massique ($\nabla \dot{m}_{V,min}$) à travers le compresseur (3) ;
   - détermination qu'il y a pompage de compresseur lorsque le gradient de pression ($\nabla p_V$) est supérieur à une limite supérieure de gradient de pression ($\nabla p_{V,lim}$) et le gradient de débit massique ($\nabla \dot{m}_{V,min}$) est inférieur à une limite inférieure de gradient de débit massique ($\nabla p_{V,lim}$) ; et
   - détermination de la température de sortie de compresseur ($T_2$) sur la base d'une pression de sortie de compresseur corrigée ($p_{2,\alpha}$), qui dépend du pompage de compresseur, dans lequel la température de sortie de compresseur ($T_2$) déterminée est basée sur une température d'entrée de compresseur non corrigée ($T_1$), qui ne tient pas compte d'une influence du pompage de compresseur sur la température d'entrée de compresseur ($T_1$), dans lequel la température d'entrée de compresseur ($T_1$) est corrigée sur la base d'un rapport de pression ($\pi_{0,V}$) entre la pression ambiante ($p_0$) et une pression d'entrée de compresseur ($p_1$).

3. Procédé selon la revendication 1 ou 2, dans lequel le gradient de pression ($\nabla pV$) correspond à un gradient de pression maximal ($\nabla pV,max$) sur une période de temps prédéfinie et/ou le gradient de débit massique ($\nabla \dot{m}V,min$) correspond à un gradient de débit massique minimal ($VmV,min$) sur la période de temps prédéfinie.

4. Procédé selon la revendication 1 ou, lorsqu'elle dépend de la revendication 1, selon la revendication 3, dans lequel la détermination de la température d'entrée de compresseur ($T_1$, $T_{1,\alpha}$) prend en compte des influences de transfert de chaleur, dans lequel les influences de transfert de chaleur comprennent au moins l'une de pertes de chaleur des parois, de chaleur accumulée et de rayonnements thermiques émanant de composants chauds.

5. Procédé selon la revendication 2 ou, lorsqu'elle dépend de la revendication 2, selon la revendication 3, dans lequel la détermination de la température de sortie de compresseur ($T_2$) prend en compte des influences de transfert de chaleur, dans lequel les influences de transfert de chaleur comprennent au moins l'une de pertes de chaleur par les parois, de chaleur accumulée et de rayonnements thermiques émanant de composants chauds.

6. Procédé selon l'une des revendications 4 et 5, dans lequel les influences de transfert de chaleur sont définies à l'aide d'au moins l'un de courbes caractéristiques et de diagrammes caractéristiques.

7. Procédé selon l'une des revendications 1, 3, 4, et 6, dans lequel l'augmentation de température de pompage de compresseur ($\Delta T_{VP}$) est modélisée par un différentiateur avec un retard de premier ordre.

8. Procédé selon l'une des revendications 2, 3, 5 et 6, dans lequel la température d'entrée de compresseur non corrigée ($T_1$) est filtrée en passe-bas.

9. Procédé selon l'une des revendications 2, 3, 5, 6 et 8, dans lequel, pour la protection contre les erreurs, la pression de sortie de compresseur corrigée ($p_{V,A,\alpha}$) correspond à une pression de sortie de compresseur mesurée ($p_{V,A}$) lorsqu'un rapport de pression ($Rv$) à travers le compresseur (3) est inférieur à une valeur limite de rapport de pression ($\pi_{V,lim}$) et une pression de sortie de compresseur ($p_{V,A}$) est inférieure à une dernière pression de sortie du compresseur valide ($p_{V,A,val}$).

10. Procédé selon l'une des revendications précédentes, dans lequel la température de sortie de compresseur ($T_2$) est filtrée en passe-bas.

11. Appareil de commande (20), qui est configuré pour mettre en œuvre un procédé selon l'une des revendications 1 à 10.

12. Véhicule automobile (10) comportant un appareil de commande (20) selon la revendication 11, dans lequel le véhicule automobile (10) est configuré et conçu pour mettre en œuvre un procédé selon l'une des revendications 1 à 10.

Fig. 1

Fig. 2

Fig. 3

Fig. 4

Fig. 5

Fig. 6

Fig. 7

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3181875 A1
- EP 3181875 A
- DE 102016220543 B3
- US 9091202 B2